# EUROPEAN PATENT SPECIFICATION

(11) **EP 1 479 201 B1**
(45) Date of publication and mention of the grant of the patent: **09.06.2010**
(21) Application number: 03703578.9
(22) Date of filing: 30.01.2003
(51) Int. Cl.: H04W 92/02, H04L 12/28, H04L 12/56, H04L 29/06

(54) **METHOD AND SYSTEM FOR RELAYED MOBILE IP SERVICES IN A TELECOMMUNICATION SYSTEM**
VERFAHREN UND SYSTEM FÜR WEITERGELEITETE MOBIL-IP-DIENSTE IN EINEM TELEKOMMUNIKATIONSSYSTEM
PROCEDE ET SYSTEME DESTINES A DES SERVICES IP MOBILES RELAYES DANS UN SYSTEME DE TELECOMMUNICATION

(30) Priority: 25.02.2002 SE 0200549
(43) Date of publication of application: 24.11.2004
(73) Proprietor: TELEFONAKTIEBOLAGET LM ERICSSON (publ), 164 83 Stockholm (SE)
(72) Inventor: HULTGREN, Anders, S-182 34 Danderyd (SE); DANNELIND, Tomas, S-141 33 Huddinge (SE)
(74) Representative: Sjöberg, Mats Hakan
(86) International application number: PCT/SE2003/000160
(87) International publication number: WO 2003/071752

(56) References cited:
- EP-A2- 1 017 208
- WO-A2-01/20846
- WO-A2-01/46843
- vol. H.510 February 2002, DRAFT RECOMMENDATION H.510, GENEVA article 'Mobility for H-323 multimedia systems and services', XP002981170 Chapters 6.3; 7.4.1.1; 7.4.4; 7.5.2; 7.5.3

## Description

### Technical field of the invention

This invention generally relates to a method and system for an Internet Protocol (IP) based service in mobile telecommunication systems. More in detail, the invention enables a mobile communication terminal to be used as a point-to-point communication means without interference or control by an operator.

### Background of the invention

The Internet offers access to information sources world-wide and it has turned out to be the perfect tool for retrieval of all kinds of content, irrespective of whether the information content is audio or graphics. Typically we do not expect to benefit from the Internet and information found and retrieved from there until we arrive at some familiar point, such as in the work office, in school or in front of a computer terminal at home. The increasing number and variety of wireless devices offering Internet Protocol (IP) based connectivity, such as mobile communication terminals, handheld computers, etc, are supposed to change our perceptions about the Internet in a near future.

In order to fully understand the contrast between current realities of IP connectivity and future possibilities, the transition towards mobility that has occurred in telephony over the past decade is to be considered. Seen from both a technical and financial perspective, setting up a functional mobile telecommunication network is a complicated task that requires a major initial investment, as is the case also for other kinds of telecommunication networks based on other access technologies, like for instance WLAN, IR, Bloetooth, etc. Only a few operators in each country are able to manage such an investment, and the investment is usually based on all kinds of provided capital including both venture capital and long-term loans from national banks. The operators, due to considerable amounts of instalments and interests on their loans, are forced to charge the subscribers to communication services sufficiently in order to get receipts that correspond to their initial and running expenses. This makes millions of mobile telephony subscribers in most regions pay high amounts for their accessibility and usage of state of the art communication technologies.

Not only the major initial investment in hardware, such as radio base stations, physical connection links, routers, antennas and other equipment is costly when setting up a telecommunication system. Also periodic and running maintenance, like for instance cell planning, preparation of standardised roaming agreements and control functions is realised by means of software, and development of such software products requires resources like knowledge, organisation, time, service and not the least money. In practice, it is virtually impossible for a smaller entity operator to take part in the mobile telecommunications market, even though the small scale operator may be able to get the required authorisation from responsible governments that manage national licenses for telecommunication.

Prior art, like for example the European patent application EP 1 017 208 A2, discloses a communication system providing data and voice services to subscribers at mobile terminals. Dynamic IP address assignment as well as dynamic domain name server (DNS) updates are used. However, the addresses are assigned by an operator whereby the operator is taking active part in both controlling and administering the established telecommunication connections. In the publication "The challenges of voice-over-IP-over-wireless" by Göran AP Eriksson et al. is described the requirements and current trends in the evolution of the third-generation wireless systems toward supporting more generic multimedia applications on a common platform. However, the publication does for example not disclose at least one Internet relay mobile Voice over IP (IRMV) server provided in the global and universal interconnecting network. In the international application WO01/08377 is disclosed a method for providing secure signalling connections for packet data network telephony calls

There is thus a need for an improved and simultaneously simplified technique for less costly, preferably pre-paid low cost telephony services, including both voice and data communication services, which are free from subscription. Moreover, a way is required for simpler and more efficient administration of established calls in a telecommunication system. Billing systems of today for use in telecommunication are huge computer systems of considerable complexity.

### Summary of the invention

It is therefore an object of this invention to provide a simplified, but yet improved technique, in particular for searching and finding Voice over IP enabled mobile communication terminals. Another object is to make it possible for small-scale operators to initiate their activities and create a scalable and easily running business, which can be established in a reasonably short period of time and without overloading initial investments in time and money.

The present invention alleviates the problems associated with prior art technology by means of an arrangement for relayed services in a mobile telecommunication system comprising:
a plurality of mobile communication terminals, from which an established point-to-point connection either originates or terminates,
the mobile communication terminals operating in a mobile packet switched communication network, such as a third generation general packet radio service network,
a global and universal interconnecting network, such as the Internet,
at least one router, which bi-directionally provides a connecting bridge for transmission of data between the mobile packet switched communication network and the global and universal interconnecting network,
   characterised in that
at least one Internet relay mobile Voice over IP (IRMV) server is provided in the a global and universal interconnecting network, in order to enable communication between mobile communication terminals so as to avoid the need for operator interference with the established point-to-point communication.
said at least one Voice over IP server is provided such that the mobile communication terminals transmit via the at least one router through the global and universal interconnecting network to the at least one Internet relay mobile Voice over IP (IRMV) server in order to enable voice communication between the mobile communication terminals using the data communication mode of the mobile communication terminals.

The objects of the present invention are fully accomplished, and the here disclosed solution to the problems stated simplifies communication in comparison with prior art technology within the field of the invention.

Using VoIP (Voice over Internet protocol) encoding in the mobile communication terminals will make it possible to make phone calls in a way similar to that of so-called chatting over Internet. This type of calls can be made without an operator having influence or even knowledge about the data transfer. With operator is here meant the entity handling transmission of mobile communication terminal data communications, such as voice and data traffic.

Hereby, new promising business opportunities are created and possible simplified business models are made conceivable. Voice communication can be carried out via VoIP using the data communication mode of the mobile communication terminal, and the entity that establishes the connection between the calling party and the called party can be anyone having access to an ordinary web server. This means that the entity may be virtually anyone, or at least a large number of people in possession of knowledge for setting up a web server, but requiring relatively limited resources and investments for doing this.

Today, many companies supply fixed IP telephones, i.e. telephones including the client software that makes them Voice over IP enabled. The market for applications in the field is growing rapidly, although the market share at present is not greater than a few percent of the entire fixed telephony market. If charging schemes for traffic become more attractive, which they probably will as the competition grows tougher and tougher, a mobile version of VoIP will be deployed at an increasing pace. In particular for international distance calls this scenario is feasible, since it is obvious from recent history that fixed VoIP has had most success when considering intercontinental calls. In just a few years of time, the trend towards multimedia content accessible from mobile communication terminals and all communication traffic being based on packet switched transmission works in favour of the present invention. Therefore, the question is not whether, but rather when the technology here disclosed will have great impact on general tele- and data communication and our everyday lives.

### Brief description of the drawings

The features, objects, and further advantages of this invention will become apparent by reading this description in conjunction with the accompanying drawings, in which like reference numerals refer to like elements and in which:
Fig 1 schematically illustrates a Internet-based mobile VoIP voice communication system according to the present invention.
Fig 2 is a flow chart depicting the general operational sequence when establishing a call using the principles in accordance with of the present invention.
Fig 3 shows a signalling scheme for managing retrieval of address information according to the present invention.
Fig 4 shows a signalling scheme for establishing a connection for voice data distribution according to the present invention.

### Detailed description

The following description is of the best mode presently contemplated for practising the invention. The description is not to be taken in a limiting sense, but is made merely for the purpose of describing the general principles of the invention. The scope of the invention should be ascertained with reference to the issued claims. For illustrative purposes, the following description is directed to a cellular radio communication system, but it will be understood that this invention is not so limited and applies to other types of communication systems. Such exemplary communication systems could be systems that utilise access technologies like WLAN, IR and Bluetooth.

With GPRS (general packet radio service) and other networks more clearly of the third generation, mobile communication terminals and networks will be able to handle data traffic in an efficient way. It is very likely that market forces will drive down prices for data traffic in comparison with current rates, and in particular when compared to rates for voice traffic. Mobile communication terminals are very much a small computer, and definitely represent a powerful tool for communication. Subscribers to third generation network services will always be requesting more coverage and higher data transmission rates. There will be a strong and persistent driving force in favour of gradually increasing data transmission rates, lowered tariffs and introduction of flat-rate fees for a certain predetermined bandwidth or transmission capacity.

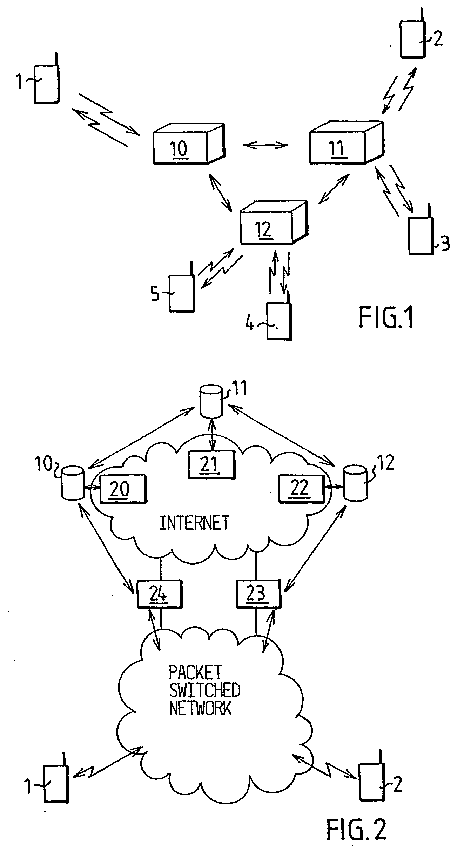

With reference to Fig 1, a schematic illustration is shown of an Internet-based mobile VoIP telecommunication system. The system includes a plurality of mobile communication terminals 1-5 and a plurality of Internet relay mobile Voice over IP (IRMV) servers 10-12. Each of the mobile communication terminals 1-5 establishes a connection with either one of the IRMV servers 10-12, via a wireless data connection provided by any wireless data operator. As will be described in the following, the communication session does not have to go via the IRMV servers 10-12, but can take place between the mobile communication terminals also as an established peer-to-peer communication session.

In a near future, mobility of IP-addresses in a form of routing will be a functionality that the operator will charge its customers for, i.e. customers who subscribe to mobile communication services. When regarding the IP-addresses to be personal instead of handled exclusively by the operators, a new way of viewing mobility is approaching and with it new and promising opportunities will emerge. The operator will be seen more as a provider of communication than a controller of communication.

An Internet relay chat service provides a way of communicating by means of so-called chatting, which is a way of instant communication by typing messages on a keyboard. The messages are displayed in real time and people can take active part in the communication irrespective of their current location. The only condition is that they are on-line and have access to a certain virtual location for the communication activity, access to a so-called chat room. The Internet relay chat consists of various separate networks of IRC (Internet relay chat) servers including computer based applications that allow users to connect to the IRC server. Generally, users of a chat service run a computer program product called a client software in order to be connectable to a server in one of the IRC networks. The servers of the network relay information bi-directionally to and from other servers within the same network.

The key idea is that the VoIP voice communication functions are partly implemented in the mobile communication terminals 1-5 and partly in the IRMV server 10-12. Alternatively, the functions are entirely implemented in the mobile communication terminals 1-5 with the IP-address register realised in the IRMV server 10-12. An example of this is that the mobile communication network of the operator, to which the communication terminal is connected, does not have information about the application used. As soon as the mobile terminal goes from turned off to idle mode, the application of the mobile terminal registers that the terminal is on-line with the defined IRMV server 10-12. The at least one involved IRMV server both sets up and controls the speech session and the path between the mobile communication terminals of the session. In another embodiment of the present invention, the ensuing session is established by and between the mobile communication terminals only, why the session can be described as a peer-to-peer session, and in response to this the IRMV servers must have made the search for the IP-address of the called party possible, and this search must have been made in advance. In a near future, the new Internet protocol IPv6 will be implemented, which will significantly influence assignment of dynamic IP-addresses. The new protocol will make the register keeping and look-up function simpler since the address space in the new protocol allows for longer address fields than the Internet protocol of today. Each mobile communication terminal 1-5, as well as every other terminal, will have its own fixed IP-address, whereby the register keeping and look-up function is made even unnecessary for known identities.

The present invention can be initiated at low intensity, and by means of a very limited initial investment. The "Internet relay chat" type of server (IRC server) application can establish a dedicated chat channel for two communication terminals, i.e. two persons communicating with each other. Transmitted chat messages contain voice traffic encoded as VoIP, in detail meaning voice traffic transmitted in the form of encoded packets, for instance in accordance with the H.323v2 protocols, for application in a third generation mobile communication terminal or terminals equipped with H.323v2 protocol functionality.

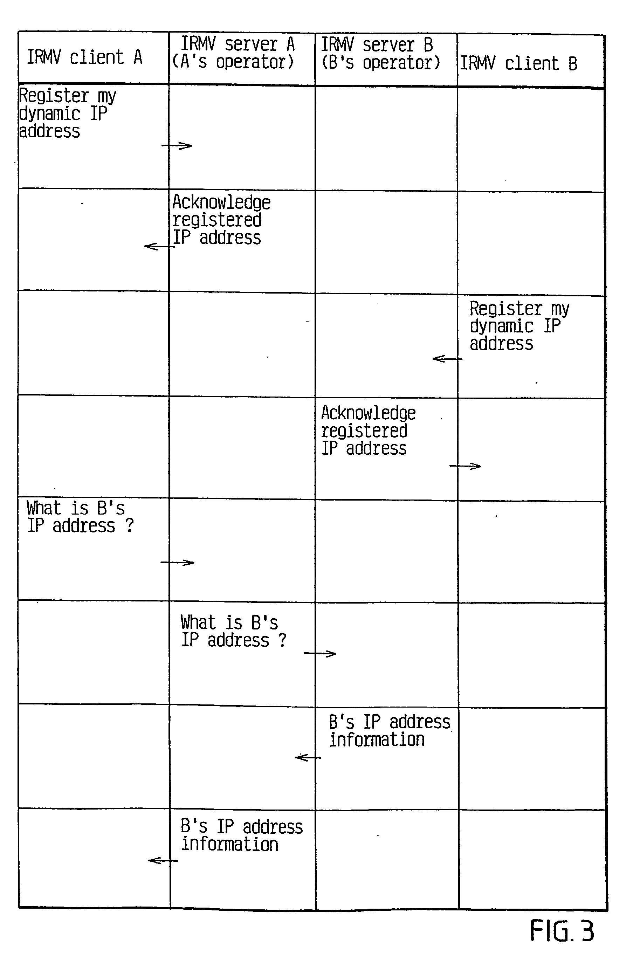

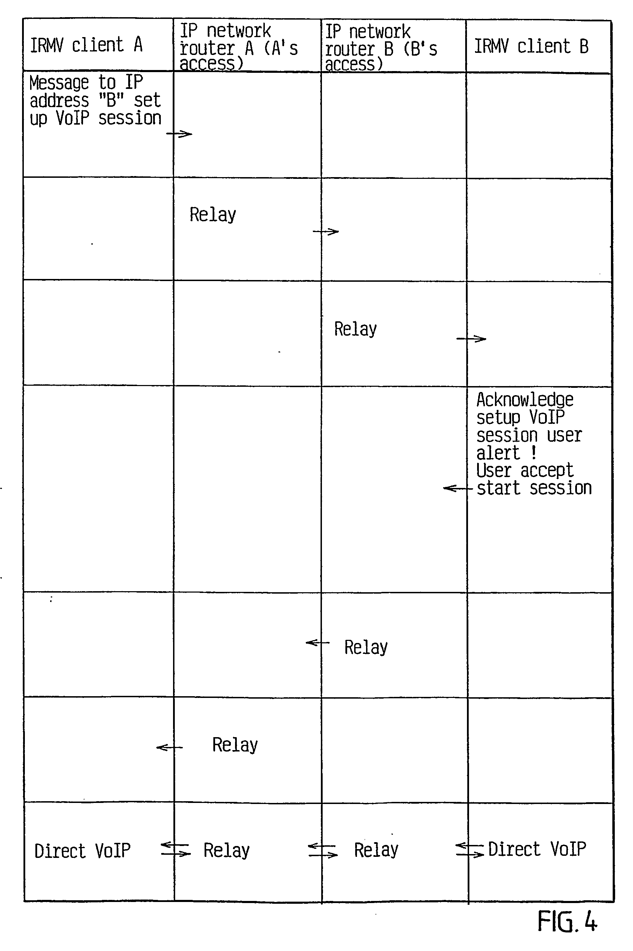

With reference to Fig 2, a flow chart is depicting the general operational sequence when establishing a call using the principles in accordance with of the present invention. The Internet and a general packet switched radio communication network, for instance 3G (third generation) or a GPRS (general packet radio service) network, are connected via routers 23, 24. Depending on their respective locations, mobile communication terminals 1, 2 communicate with different radio base stations (not shown) within the general packet switched radio communication network. Information is transmitted to the Internet via routers 23, 24 and from there to and from other routers 20-22 and to interconnected IRMV servers 10-12. A more detailed description of the signalling schemes will follow below with particular reference to Fig 3 and Fig 4.

An alternative embodiment is that the IP-address for the called mobile communication terminal as well as its status whether it is online, offline, idle or busy is determined via the IRMV server network, whereas the voice communication include voice packets and control signals. The mobile communication terminal of the calling party has a client application installed. The client application enables the search for the IP-address of the party to be called based on an identifier, such as name, telephone number possibly including country code, a unique identity number, etc. the unique identity number could be the fixed assigned IP-address. The IP sessions containing the call is outside of the IRMV server and is able to exist in another IP-based network, even within the public Internet or within a dedicated IP-based voice network. This location of the IP session depends of course on the quality requirements on established communications, the so-called quality of service (QoS). The client application running in the terminals could have a functionality that requests a new session (routing path) if quality of service deteriorates, possibly depending on transmission delay or unsatisfactory bit error rate. In this particular case, the IRMV server network is only used for searching and finding the IP-address of the party to be called. The IRMV servers co-operate in searches for IP-addresses using for instance standard methods similar to those of an Internet DNS (domain name server) network or a Gnutella type software, i.e. a combined software based search engine and file server where the file server is able to make various identifiers available for searching.

With reference to Fig 3, the operative sequence of establishing a call session is described. A mobile communication terminal being turned on, i.e. a switch of modes from turned off to idle mode is made. The mobile communication terminal with its installed IRMV client software connects to the Internet and is given a dynamic IP-address. Subsequently, and possible on user command, the IRMV client A application sends a message to the IRMV server A, which server may be handled by client A's operator, in order to register the client's dynamic IP-address in a way that others have the possibility of finding it, i.e. by name, telephone number or other unique identity number, such as fixed assigned IP-address. As previously mentioned, the server may be handled by client A's operator, but this does not have to be the case. Also another entity may handle the IRMV more or less on behalf of the operator, possibly even on a franchise basis or other terms of licensing. The signalling sequence continues with an acknowledgement of the registration by client A's operator. Another client B registers its dynamic IP-address the same way, an address that is acknowledged by client B's operator accordingly. A query of client B's dynamic IP-address is made after the registration procedure of client A. The query is relayed from the client A by client A's operator to client B's operator from where the IP-address is forwarded to client A via client A's operator. Client B's dynamic IP-address would be delivered as a response to the query or search for client B's identifiers. After this signalling sequence, client A is aware of the dynamic IP-address of client B and the basic but still necessary requirements for a bi-directional communication session to be established have been fulfilled.

As soon as one of the subscribers wants to call another subscriber, he or she enters a command to the IRMV client application, such as mobile communication terminal, in order to make a call via the IRMV server network. The search procedure of the IRMV server is activated when searching for the IP-address of the other subscriber. As an alternative, also name, phone number or any other unique identification number can be searched for. If the client B is accessible, i.e. a match is found, an IP-address is delivered and a call session is initiated. This means a VoIP call has been established. It should be noted that a conference call, which is a call with at least three participants can be initiated in the same way as the above initiation of a call with only two participants.

With reference to Fig 4, a signalling scheme is displayed for setting up a relayed communication connection according to the present invention, which is similar to that of a chat connection set-up. The sequence is initialised in that a massage is transmitted from the client A's dynamic IP-address to the client B's dynamic IP-address saying that a VoIP communication session is requested to be established. The request message is transmitted from client A to client B via client A's and client B's IP network access routers 23, 24. After the massage has been received by client B, the message is accepted and acknowledged. This acknowledgement message is transmitted back to client A via relay stations, i.e. access routers handled by the operators respectively in the communication network. After having been received, a relayed communication session is established between client A and client B, which direct communication session is relayed over the IP network access routers 23, 24. A subsequent call tear-down procedure is initiated either by the client A or client B IRMV application and is relayed in a corresponding way.

One of the important points to address, and a crucial hurdle that has to be overcome for succeeding in communication technology is the speech quality in relation to the price of a provided service. Software clients, i.e. units connected directly to the subscribers' mobile communication terminals also measure the quality of the session with regards to packet loss, packet delay and jitter. If the voice quality is below a certain level, which level may be defined and predetermined by the user, either of the clients signals to the other client or to the IRMV server that a new session has to be established with higher transmission quality. This could even result in a so-called public voice dedicated packet network, PVDPN, provided adequate transmission quality can not be delivered by changing routing path. By means of the present invention, the routing path can be exchanged to a new routing path with higher quality than the original path of poorer transmission quality. For improving the radio transmission quality, one of a plurality of tools to be utilised is the so-called Rocco protocol. However, improvement of transmission quality will not be further described in this document, and therefore reference is made to an article in the Ericsson Review No. 1, 2000, Göran AP Eriksson et al.

In yet another embodiment, the mobile communication terminals could be WLAN or Bluetooth enabled devices. The mobile communication terminals would then communicate with WLAN or Bluetooth hubs, which hubs are also generally referred to as access points (AP). An access point could be a stand alone device, even though it is of course connected to the Internet, or form part of a network of access pionts connected to the Internet. In such an embodiment the access points could incorporate the previously described IRMV server functionality. A specific access point would in that case be in possession of IP-addresses, or alternatively names, telephone numbers or other unique identification numbers or fixed allocated IP-addresses of all terminals hosted by it, i.e. all terminals accessible from the specific access point. The IRMV server functionality of the access point would then be able to search for IP-addresses or other unique identifiers in the same way as described above. If the IRMV functionality incorporates a search engine as well as file sharing software (for example a so-called Gnutella client), the access point could search for IP-addresses on other access points and regular IRMV servers described in the above scenario and at the same time make the identification data available for searching by other access points or regular IRMV servers. An example is information content, such as a song would have a title, artist or record label, which are equivalent to the identifiers of for instance client B. Therefore, the procedure or searching for the IP-address of client B and the related VoIP session are very much like a bi-directional download of a song from the Internet. This is accordingly in analogy with the procedures when searching for content on the "Gnutella network". Referring to Fig 4, setting up a communication session is accomplished similar to establishing a chat connection with IRC functionality.

It will be appreciated by those of ordinary skill in the art that this invention can be embodied in other specific forms without departing from its essential character. The embodiments described above should therefore be considered in all respects to be illustrative and not restrictive. For example, although described above with reference to a GSM system employing a mobile communication terminal, the invention is also applicable in other types of communication systems.

## Claims

1. An arrangement for relayed services in a mobile radio frequency telecommunication system comprising:
a plurality of mobile communication terminals (1-5), from which an established point-to-point connection either originates or terminates, the mobile communication terminals (1-5) operating in a mobile packet switched communication network, such as a third generation general packet radio service network,
a global and universal interconnecting network, such as the Internet,
at least one router (23, 24), which bi-directionally provides a connecting bridge for transmission of data between the mobile packet switched communication network and the global and universal interconnection network, and
at least one Voice over IP server (10-12),
**characterised in that**
said at least one Voice over IP server is an Internet relay mobile Voice over IP (IRMV) server (10-12) provided in the global and universal interconnecting network such that the mobile communication terminals (1-5) transmit via the at least one router (23, 24) through the global and universal interconnecting network to the at least one Internet relay mobile Voice over IP (IRMV) server (10-12) in order to enable voice communication between the mobile communication terminals (1-5) using the data communication mode of the mobile communication terminals (1-5).

2. An arrangement for relayed services according to claim 1, **characterised in that**
the servers (10-12) and routers (20-24) are adapted to allow voice information to be transmitted over the data distribution channels.

3. An arrangement for relayed services according to claim 1, **characterised in that**
the mobile communication terminals (1-5) are adapted to allow voice information to be transmitted using the data communication mode of the mobile communication terminals.

4. An arrangement for relayed services according to anyone of preceding claims,
**characterised in that**
voice traffic is encoded in accordance with any of the ITU H.323 protocols.

5. An arrangement for relayed services according to anyone of preceding claims,
**characterised in that**
provided access points for mobile communication terminals (1-5) at least partly incorporate the IRMV server functionality.

6. An arrangement for relayed services according to claim 5, **characterised in that**
the IRMV server functionality at access points is carried out by means of search engine and file sharing software.

7. An arrangement for relayed services according to anyone of preceding claims,
**characterised in that**
the mobile communication terminals (1-5) are WLAN or Bluetooth enabled devices.

8. A method in a mobile radio frequency telecommunication system for retrieval of dynamic IP-address information in order to establish a connection for voice data distribution between a first mobile communication terminal (1-5) and a second mobile communication terminal (1-5),
**characterised by** the steps of:
registering an IP-address of a first mobile communication terminal (1-5) by transmitting a message via at least one router (23, 24) through a global and universal interconnecting network to at least one Internet relay mobile Voice over IP (IRMV) server (10-12) provided in the global and universal interconnecting network, the registration being acknowledged by the operator of the first mobile communication terminal (1-5),
registering an IP-address of a second mobile communication terminal (1-5) by transmitting a message via at least one router (23, 24) through the global and universal interconnecting network to at least one IRMV server (10-12) provided in the global and universal interconnecting network, the registration being acknowledged by the operator of the second mobile communication terminal (1-5),
the first mobile communication terminal (1-5) transmitting a request for the registered IP-address of the second mobile communication terminal (1-5), the request being relayed from one IRMV server (10-12) provided in the global and universal interconnecting network to the other in case of different records, and
the first mobile communication terminal (1-5) retrieving the registered IP-address of the second mobile phone (1-5) from the IRMV server (10-12) provided in the global and universal interconnecting network by transmitting via the at least one router (23, 24) through the global and universal interconnecting network to at least one IRMV server (10-12).

9. A method in a mobile telecommunication system according to claim 8, further
**characterised by** the step of:
retrieving the dynamic IP-address of at least a third communication terminal (1-5), which is to be connected to a call session between other mobile communication terminals (1-3).

10. A method in a mobile radio frequency telecommunication system for establishing a connection for voice data distribution between a first mobile communication terminal (1-5) and a second mobile communication terminal (1-5),
**characterised by** the steps of:
a first mobile communication terminal (1-5) transmitting a request for establishing a communication session with a registered IP-address of a second mobile phone (1-5) via at least one router (23, 24) through a global and universal interconnecting network to at least one first Internet relay mobile Voice over IP (IRMV) server (10-12) provided in a global and universal interconnecting network,
the request being relayed from said first IRMV server (10-12) via another IRMV server (10-12) provided in the global and universal interconnecting network in case of different IRMV servers (10-12) to the second mobile communication terminal (1-5),
the second mobile communication terminal (1-5) transmitting an acknowledgement message via the at least one Internet relay mobile Voice over IP (IRMV) server to the first mobile communication terminal (1-5) including acceptance message and preparation for communication session message,
the acknowledgement message being relayed from said another IRMV server (10-12) to said first IRMV server (10-12) in case of different IRMV servers, and
establishing a relayed communication session between the first and second mobile communication terminals via the IRMV server (10-12) provided in the global and universal interconnecting network.

11. A method in a mobile telecommunication system according to claim 10, further
**characterised by** the step of:
continuing to establish a connection with at least a third communication terminal (1-5), which is connected to the previously connected mobile communication terminals (1-3).

12. A method in a mobile telecommunication system according to anyone of claims 8-11, further **characterised by**
in dependence of the transmission quality of a call, establishing a new routing path onto which an established call of unsatisfactory transmission quality can be exchanged.

13. A method in a mobile telecommunication system according to anyone of claims 8-11, further **characterised by**
registering the IP-address, the IP-address being associated with certain identifiers, such as name, telephone number, or any other unique identity number, such as a fixed allocated IP-address.

14. A method in a mobile telecommunication system according to anyone of claims 8-13, further **characterised by**
allocating IP-addresses by means of a Internet service provider (ISP), preferably mobile ISP, or other entity managing an access point.

15. A method in a mobile telecommunication system according to anyone of claims 8-14, further **characterised by**
searching, by means of search engine and file sharing software, for a dynamic IP-address by means of thereto associated identifiers, such as name, telephone number, or any other unique identity number, such as a fixed allocated IP-address.

16. A computer program product, integrated in the arrangement of anyone of claims 1-7, **characterised in that**
the computer program product is adapted for carrying out the method steps of anyone of claims 8-15.

## Patentansprüche

1. Anordnung für Weiterleitungsdiensteineinem Mobilfunkfrequenz-Telekommunikationssystem, umfassend:
eine Mehrzahl von Mobilkommunikationsendgeräten (1-5), von denen eine hergestellte Punkt-zu-Punkt-Verbindung entweder ausgeht oder dort endet, wobei die Mobilkommunikationsendgeräte (1-5) in einem mobilen paketvermittelten Kommunikationsnetzwerk arbeiten, wie etwa einem allgemeinen Paketfunkdienstnetzwerk dritter Generation (GPRS),
ein globales und universelles Zwischenverbindungsnetzwerk wie das Internet,
zumindest einen Router (23, 24), der bidirektional eine Verbindungsbrücke zur Übertragung von Daten zwischen dem mobilen paketvermittelten Kommunikationsnetzwerk und dem globalen und universellen Zwischenverbindungsnetzwerk bereitstellt, und
zumindest einen Voice-over-IP (IP-basierter Sprachdienst)-Server (10-12),
**dadurch gekennzeichnet, dass**
der zumindest eine Voice-over-IP-Server ein Internet-Weiterleitungs-Mobil-Voice-over-IP (IRMV)-Server (10-12) ist, der im globalen und universellen Zwischenverbindungsnetzwerk so vorgesehen ist, dass die Mobilkommunikationsendgeräte (1-5) über den zumindest einen Router (23, 24) durch das globale und universelle Zwischenverbindungsnetzwerk zu dem zumindest einen Internet-Weiterleitungs-Mobil-Voice-over-IP (IRMV)-Server (10-12) senden, um Sprachkommunikation zwischen den Mobilkommunikationsendgeräten (1-5) unter Verwendung des Datenkommunikationsmodus der Mobilkommunikationsendgeräte (1-5) zu ermöglichen.

2. Anordnung für Schaltdienste gemäß Anspruch 1, **dadurch gekennzeichnet, dass**
die Server (10-12) und Router (20-24) dafürausgelegt sind, Sprachinformationen zu gestatten, über die Datenverteilungskanäle gesendet zu werden.

3. Anordnung für Weiterleitungsdienste gemäß Anspruch 1, **dadurch gekennzeichnet, dass**
die mobilen Kommunikationsendgeräte (1-5) dafür ausgelegt sind, es Sprachinformationen zu gestatten, unter Verwendung des Datenkommunikationsmodus der Mobilkommunikationsendgeräte gesendet zu werden.

4. Anordnung für Weiterleitungsdienste gemäß einem der vorstehenden Ansprüche, **dadurch gekennzeichnet, dass**
Sprachverkehr gemäß einem der ITU H.323 Protokolle codiert wird.

5. Anordnung für Weiterleitungsdienste gemäß einem der vorstehenden Ansprüche, **dadurch gekennzeichnet, dass**
bereitgestellte Zugangspunkte für Mobilkommunikationsendgeräte (1-5) zumindest teilweise die IRMV-Server-Funktionalität inkorporieren.

6. Anordnung für Weiterleitungsdienste gemäß Anspruch 5, **dadurch gekennzeichnet, dass**
die IRMV-Server-Funktionalität an Zugangspunkten mittels SuchmaschineundSoftware für gemeinsamen Datenzugriff ausgeführt wird.

7. Anordnung für Weiterleitungsdienste gemäß einem der vorstehenden Ansprüche, **dadurch gekennzeichnet, dass**
die Mobilkommunikationsendgeräte (1-5) WLAN- oder Bluetooth-fähige Vorrichtungen sind.

8. Verfahren in einem Mobilfunkfrequenz-Telekommunikationssystem zum Wiedergewinnen von dynamischer IP-Adressinformation, um eine Verbindung zur Sprachdatenverteilung zwischen einem ersten Mobilkommunikationsendgerät (1-5) und einem zweiten Mobilkommunikationsendgerät (1-5) herzustellen,
**gekennzeichnet durch** die Schritte:
Registrieren einer IP-Adresseeinesersten Mobilkommunikationsendgeräts (1-5) **durch** Senden einer Nachricht über zumindest einen Router (23, 24) **durch** ein globales und universelles Zwischenverbindungsnetzwerk zu zumindest einem Internet-Weiterleitungs-Mobil-Voice-over-IP (IRMV)-Server (10-12), der im globalen und universellen Zwischenverbindungsnetzwerk vorgesehen ist, wobei die Registrierung **durch** den Bediener des ersten Mobilkommunikationsendgeräts (1-5) bestätigt wird,
Registrieren einer IP-Adresse eines zweiten Mobilkommunikationsendgeräts (1-5) **durch** Senden einer Nachricht über zumindest einen Router (23, 24) **durch** ein globales und universelles Zwischenverbindungsnetzwerk zu zumindest einen IRMV-Server (10-12), der im globalen und universellen Zwischenverbindungsnetzwerk vorgesehen ist, wobei die Registrierung **durch** den Bediener des zweiten Mobilkommunikationsendgeräts (1-5) bestätigt wird,
wobei das erste Mobilkommunikationsendgerät (1-5) eine Anforderung zur registrierten IP-Adresse des zweiten Mobilkommunikationsendgeräts (1-5) sendet, wobei die Anforderung von einem IRMV-Server (10-12), der im globalen und universellen Zwischenverbindungsnetzwerk vorgesehen ist, zu dem anderen im Falle verschiedener Aufzeichnungen weitergeleitet wird, und
das erste Mobilkommunikationsendgerät (1-5) die registrierte IP-Adresse des zweiten mobilen Telefons (1-5) aus dem IRMV-Server (10-12) wiedergewinnt, der im globalenunduniversellenZwischenverbindungsnetzwerk vorgesehen ist, **durch** Senden, über den zumindest einen Router (23, 24) **durch** das globale und universelle Zwischenverbindungsnetzwerk an zumindest einen IRMV-Server (10-12).

9. VerfahrenineinemmobilenTelekommunikationssystem gemäß Anspruch 8, weiterhin **gekennzeichnet durch** den Schritt:
Wiedergewinnen der dynamischen IP-Adresse zumindest eines dritten Kommunikationsendgerätes (1-5), das mit einer Anrufsitzung zwischen anderen Mobilkommunikationsendgeräten (1-3) zu verbinden ist.

10. Verfahren in einem mobilen Funkfrequenz-Telekommunikationssystem zum Etablieren einer Verbindung für Sprachdatenverteilung zwischen einem ersten Mobilkommunikationsendgerät (1-5) und einem zweiten Mobilkommunikationsendgerät (1-5), **gekennzeichnet durch** die Schritte:
ein erstes Mobilkommunikationsendgerät (1-5) sendet eine Anforderung zur Herstellung einer Kommunikationssitzung mit einer registrierten IP-Adresse eines zweiten mobilen Telefons (1-5) über zumindest einen Router (23, 24) durch ein globales und universelles Zwischenverbindungsnetzwerk, zu zumindest einem ersten Internet-Weiterleitungs-Mobil-Voice-over-IP (IRMV)-Server (10-12), der in einem globalen und universellen Zwischenverbindungsnetzwerk vorgesehen ist,
wobei die Anforderung aus dem ersten IRMV-Server (10-12) über einen anderen IRMV-Server (10-12), der im globalen und universellen Zwischenverbindungsnetzwerk vorgesehen ist, im Falle unterschiedlicher IRMV-Server (10-12) an das zweite Mobilkommunikationsendgerät (1-5) weitergeleitet wird,
das zweite Mobilkommunikationsendgerät (1-5) eine Bestätigungsnachricht über den zumindest einen Internet-Weiterleitungs-Mobil-Voice-over-IP (IRMV)-Server an das erste mobile Kommunikationsendgerät (1-5) sendet, einschließlich Akzeptanznachricht und Vorbereitung für die Kommunikationssitzungsnachricht,
wobei die Bestätigungsnachricht von dem anderen IRMV-Server (10-12) zum ersten IRMV-Server (10-12) im Falle unterschiedlicher IRMV-Server weitergeleitet wird, und
Herstellen einer weitergeleiteten Kommunikationssitzung zwischen den ersten und zweiten Mobilkommunikationsendgeräten über den IRMV-Server (10-12), der im globalen und universellen Zwischenverbindungsnetzwerk vorgesehen ist.

11. Verfahren in einem mobilen Telekommunikationssystem gemäß Anspruch 10, weiterhin **gekennzeichnet durch** den Schritt:
Fortsetzen der Etablierung einer Verbindung mit zumindest einem dritten Kommunikationsendgerät (1-5), dasmitdenzuvorverbundenenmobilen Kommunikationsendgeräten (1-3) verbunden wird.

12. Verfahren in einem mobilen Telekommunikationssystem gemäß einem der Ansprüche 8 bis 11, weiterhin **gekennzeichnet durch**
abhängig von der Übertragungsqualität eines Anrufs, Etablieren eines neuen Routingpfads, auf den ein hergestellter Anruf einer unzufriedenstellenden Übertragungsqualität vermittelt werden kann.

13. Verfahren in einem mobilen Telekommunikationssystem gemäß einem der Ansprüche 8 bis 11, weiterhin **gekennzeichnet durch**
Registrieren der IP-Adresse, wobei die IP-Adresse mit gewissen Identifikatoren assoziiert ist, wie etwa Name, Telefonnummer oder irgendeine andere eindeutige Identitätsnummer, wie etwa eine feste zugewiesene IP-Adresse.

14. Verfahren in einem mobilen Telekommunikationssystem gemäß einem der Ansprüche 8 bis 13, weiterhin **gekennzeichnet durch**
Allozieren von IP-Adressen mittels eines Internet-Dienste-Bereitstellers (ISP, Internet Service Provider), vorzugsweise eines Mobil-ISP, oder einer anderen einen Zugangspunkt verwaltenden Entität.

15. Verfahren in einem mobilen Telekommunikationssystem gemäß einem der Ansprüche 8 bis 14, weiterhin **gekennzeichnet durch**
Suchen, mittels einer Suchmaschine und Software für gemeinsamen Datenzugriff, nach einer dynamischen IP-Adresse mittels damit assoziierten Identifikatoren, wie etwa Name, Telefonnummer oder einer anderen eindeutigen Identitätsnummer, wie etwa einer fixen allozierten IP-Adresse.

16. Computerprogrammprodukt,integriertindieAnordnung eines der Ansprüche 1 bis 7, **dadurch gekennzeichnet, dass**
das Computerprogrammprodukt dafür ausgelegt ist, die Verfahrensschritte eines der Ansprüche 8 bis 15 auszuführen.

## Revendications

1. Agencement pour services relayés dans un système de télécommunication mobile par radiofréquence comprenant :
une pluralité de terminaux (1-5) de communication mobile, où une connexion point à point établie trouve son origine ou se termine, les terminaux (1-5) de communication mobile fonctionnant dans un réseau de communication mobile à commutation de paquets, tel qu'un réseau de service général de radiocommunication par paquets de troisième génération,
un réseau d'interconnexion universel et mondial, tel qu'Internet,
au moins un routeur (23, 24), qui fournit de manière bidirectionnelle un pont de liaison pour la transmission de données entre le réseau de communication mobile à commutation de commuté paquets et le réseau d'interconnexion universel et mondial, et
au moins un serveur (10-12) de voix sur IP,
**caractérisé en ce que**
ledit au moins un serveur de voix sur IP est un serveur (10-12) de voix sur IP par relais Internet (IRMV) pourvu dans le réseau d'interconnexion universel et mondial de sorte que les terminaux (1-5) de communication mobile transmettent par le biais de l'au moins un routeur (23, 24) à travers le réseau d'interconnexion universel et mondial à l'au moins un serveur (10-12) de voix sur IP mobile par relais Internet (IRMV) afin de permettre une communication vocale entre les terminaux (1-5) de communication mobile en utilisant le mode de communication de données des terminaux (1-5) de communication mobile.

2. Agencement pour services relayés selon la revendication 1, **caractérisé en ce que**
les serveurs (10-12) et les routeurs (20-24) sont adaptés pour permettre à des informations vocales d'être transmises sur les canaux de distribution de données.

3. Agencement pour services relayés selon la revendication 1, **caractérisé en ce que**
les terminaux (1-5) de communication mobile sont adaptés pour permettre à des informations vocales d'être transmises en utilisant le mode de communication de données des terminaux de communication mobile.

4. Agencement pour services relayés selon l'une quelconque des revendications précédentes, **caractérisé en ce qu'**
un trafic vocal est encodé conformément à l'un quelconque parmi les protocoles ITU H.323.

5. Agencement pour services relayés selon l'une quelconque des revendications précédentes, **caractérisé en ce que**
des points d'accès prévus pour des terminaux (1-5) de communication mobile incorporent au moins en partie la fonctionnalité de serveur IRMV.

6. Agencement pour services relayés selon la revendication 5, **caractérisé en ce que**
la fonctionnalité de serveur IRMV au niveau de points d'accès est exécutée au moyen d'un logiciel de partage de fichiers et d'un moteur de recherche.

7. Agencement pour services relayés selon l'une quelconque des revendications précédentes, **caractérisé en ce que**
les terminaux (1-5) de communication mobile sont des dispositifs opérant par Bluetooth ou par réseau local sans fil.

8. Procédé dans un système de télécommunication mobile par radiofréquence pour la récupération d'informations d'adresse IP dynamique afin d'établir une liaison pour la distribution de données vocales entre un premier terminal (1-5) de communication mobile et un deuxième terminal (1-5) de communication mobile,
**caractérisé par** les étapes qui consistent à :
enregistrer une adresse IP d'un premier terminal (1-5) de communication mobile en transmettant un message par le biais d'au moins un routeur (23, 24) à travers un réseau d'interconnexion universel et mondial à au moins un serveur (10-12) de voix sur IP mobile par relais Internet (IRMV) pourvu dans le réseau d'interconnexion universel et mondial, l'enregistrement étant confirmé par l'opérateur du premier terminal (1-5) de communication mobile,
enregistrer une adresse IP d'un deuxième terminal (1-5) de communication mobile en transmettant un message par le biais d'au moins un routeur (23, 24) à travers le réseau d'interconnexion universel et mondial à au moins un serveur (10-12) IRMV pourvu dans le réseau d'interconnexion universel et mondial, l'enregistrement étant confirmé par l'opérateur du deuxième terminal (1-5) de communication mobile,
le premier terminal (1-5) de communication mobile transmettant une demande pour l'adresse IP enregistrée du deuxième terminal (1-5) de communication mobile, la demande étant relayée d'un serveur (10-12) IRMV pourvu dans le réseau d'interconnexion universel et mondial à l'autre dans le cas d'enregistrements différents, et
le premier terminal (1-5) de communication mobile récupérant l'adresse IP enregistrée du deuxième téléphone mobile (1-5) du serveur (10-12) IRMV pourvu dans le réseau d'interconnexion universel et mondial par transmission par le biais de l'au moins un routeur (23, 24) à travers le réseau d'interconnexion universel et mondial à au moins un serveur IRMV (10-12).

9. Procédé dans un système de télécommunication mobile selon la revendication 8, **caractérisé en outre par** l'étape qui consiste à :
récupérer l'adresse IP dynamique d'au moins un troisième terminal de communication (1-5), qui doit être connecté à une session d'appel entre d'autres terminaux de communication mobile (1-3).

10. Procédé dans un système de télécommunication mobile par radiofréquence destiné à établir une connexion pour la distribution de données vocales entre un premier terminal (1-5) de communication mobile et un deuxième terminal (1-5) de communication mobile,
**caractérisé par** les étapes selon lesquelles :
un premier terminal (1-5) de communication mobile transmet une demande pour établir une session de communication avec une adresse IP enregistrée d'un deuxième téléphone mobile (1-5) par le biais d'au moins un routeur (23, 24) à travers un réseau d'interconnexion universel et mondial à au moins un premier serveur (10-12) de voix sur IP mobile par relais Internet (IRMV) pourvu dans un réseau d'interconnexion universel et mondial,
la demande est relayée dudit premier serveur (10-12) IRMV au deuxième terminal (1-5) de communication mobile à travers un autre serveur (10, 12) IRMV pourvu dans le réseau d'interconnexion universel et mondial dans le cas de serveurs (10-12) IRMV différents,
le deuxième terminal (1-5) de communication mobile transmet un accusé de réception à travers l'au moins un serveur (IRMV) de voix sur IP mobile par relais internet au premier terminal (1-5) de communication mobile comportant un message d'acceptation et la préparation pour un message de session de communication,
l'accusé de réception est relayé dudit autre serveur (10-12) IRMV audit premier serveur (10-12) IRMV dans le cas de serveurs IRMV différents, et
une session de communication relayée entre les premier et deuxième terminaux de communication mobile par le biais du serveur (10-12) IRMV pourvu dans le réseau d'interconnexion universel et mondial est établie.

11. Procédé dans un système de télécommunication mobile selon la revendication 10, **caractérisé en outre par** l'étape qui consiste à :
poursuivre l'établissement d'une connexion avec au moins un troisième terminal de communication (1-5), qui est connecté aux terminaux (1-3) de communication mobile précédemment connectés.

12. Procédé dans un système de télécommunication mobile selon l'une quelconque des revendications 8 à 11, **caractérisé en outre par** le fait :
selon la qualité de transmission d'un appel, d'établir un nouveau chemin de routage sur lequel un appel établi d'une qualité de transmission non satisfaisante peut être échangé.

13. Procédé dans un système de télécommunication mobile selon l'une quelconque des revendications 8 à 11, **caractérisé en outre par** le fait
d'enregistrer l'adresse IP, l'adresse IP étant associée à certaines identifiants, tel qu'un nom, un numéro de téléphone, ou tout autre numéro d'identification unique, tel qu'une adresse IP attribuée fixe.

14. Procédé dans un système de télécommunication mobile selon l'une quelconque des revendications 8 à 13, **caractérisé en outre par** le fait
d'attribuer des adresses IP au moyen d'un fournisseur de services Internet (ISP), de préférence un ISP mobile, ou une autre entité gérant un point d'accès.

15. Procédé dans un système de télécommunication mobile selon l'une quelconque des revendications 8 à 14, **caractérisé en outre par** le fait
de rechercher, au moyen d'un moteur de recherche et d'un logiciel de partage de fichiers, une adresse IP dynamique au moyen d'identifiants qui lui sont associés, tel qu'un nom, un numéro de téléphone ou tout autre numéro d'identification unique, tel qu'une adresse IP attribuée fixe.

16. Produit de programme informatique, intégré dans l'agencement de l'une quelconque des revendications 1 à 7, **caractérisé en ce que**
le produit de programme informatique est adapté pour exécuter les étapes du procédé de l'une quelconque des revendications 8 à 15.
